# EUROPEAN PATENT APPLICATION

(11) **EP 4 550 009 A1**
(43) Date of publication of application: **07.05.2025**
(21) Application number: 24209108.0
(22) Date of filing: 28.10.2024
(51) Int. Cl.: G01V 5/22, G01N 23/06

(54) **X-RAY INSPECTION APPARATUS**

(30) Priority: 31.10.2023 JP 2023186674
(71) Applicant: Ishida Co., Ltd., Kyoto-shi Kyoto 606-8392 (JP)
(72) Inventor: YURUGI, Futoshi, Ritto-shi, Shiga, 520-3026 (JP); TOMINAGA, Kota, Ritto-shi, Shiga, 520-3026 (JP)
(74) Representative: Global IP Europe Patentanwaltskanzlei

(57) **Abstract**

An X-ray inspection apparatus (1) includes a conveying unit (5) configured to convey an article (G), an irradiation unit (6) configured to irradiate the article (G) conveyed by the conveying unit (5) with X-rays, a sensor unit (7) in which a detection elements (11) that detect the X-rays are arranged in a planar shape, an image generation unit (23) configured to read detection results output from at least some of the detection elements (11) at a predetermined time interval and generate an image, and a time setting unit (22) configured to set the predetermined time interval, where the time setting unit (22) is configured to multiply the predetermined time interval by a magnification set on the basis of a conveyance speed of the conveying unit (5) or the detection results.

## Description

### Technical Field

The present invention relates to an X-ray inspection apparatus.

### Background Art

In the related art, an inspection apparatus using electromagnetic waves such as X-rays is used as an apparatus for inspecting objects to be inspected (articles) such as foodstuffs and pharmaceuticals. For example, an article inspection apparatus disclosed in Patent Document 1 is provided with an irradiation unit that irradiates a moving object to be inspected with radially spreading electromagnetic waves, and a detection unit that detects electromagnetic waves affected by the object to be inspected by a plurality of detection elements. The article inspection apparatus is provided with a delay time setting unit that sets a plurality of delay times on the basis of a predetermined reference delay time, and a TDI image generation unit that performs a time delay integration process for adding detection data detected by the detection unit using a plurality of delay times to generate a plurality of Time Delay Integral images (TDI images) corresponding to the plurality of delay times. The user of the article inspection apparatus uses an advantageous TDI image among the plurality of TDI images generated according to the plurality of delay times to determine the quality of an object to be inspected.

### Citation List

### Patent Literature

Patent Document 1: JP 2021-156635 A

### Summary of Invention

### Technical Problem

In the article inspection apparatus described above, the actual conveyance speed of the object to be inspected by a conveying unit is not related to setting the predetermined reference delay time and the plurality of delay times. Thus, it is difficult to appropriately set the delay time according to the conveyance speed of the object to be inspected. In such an article inspection apparatus, there is a concern that the detection result output from the detection unit may not be satisfactory depending on the actual conveyance speed, and as a result, the quality of an object to be inspected may not be accurately determined.

An object of one aspect of the present invention is to provide an X-ray inspection apparatus that can perform a satisfactory inspection regardless of the conveyance speed.

### Solution to Problem

(1) An X-ray inspection apparatus according to an aspect of the present invention, includes:
   a conveying unit configured to convey an article;
   an irradiation unit configured to irradiate the article conveyed by the conveying unit with X-rays;
   a sensor unit in which detection elements configured to detect the X-rays are arranged in a planar shape;
   an image generation unit configured to read detection results output from at least some of the detection elements at a predetermined time interval and generate an image; and
   a time setting unit configured to set the predetermined time interval,
   where the time setting unit is configured to multiply the predetermined time interval by a magnification set on the basis of a conveyance speed of the conveying unit or the detection results.

In the X-ray inspection apparatus, the time setting unit multiplies the predetermined time interval by a magnification set on the basis of the conveyance speed of the conveying unit or the detection results output from at least some of the detection elements. For example, when the conveyance speed of the conveying unit is too fast, or when the output of at least some of the detection elements is too low and the detection results are insufficient, the time setting unit multiplies the predetermined time interval by a magnification greater than 1. In this case, the predetermined time interval (delay time) at which the image generation unit reads the detection results output from the sensor unit is extended. By extending the delay time for some reason, the period during which each detection element is exposed to X-rays (X-ray exposure period) can be appropriately adjusted. Thus, since the detection results output from each detection element are improved by using the above X-ray inspection apparatus, a satisfactory inspection can be performed regardless of the conveyance speed.

(2) In the X-ray inspection apparatus according to above (1),
the sensor unit may be configured to increase or decrease the number of detection elements that operate among the detection elements on the basis of the conveyance speed or the detection results. In this case, the X-ray exposure period of each detection element can be surely set aside.

(3) In the X-ray inspection apparatus according to above (1) or (2),
the sensor unit may detect the X-rays by a photon counting method. In this case, the contrast of the image generated by the image generation unit can be improved.

(4) In the X-ray inspection apparatus according to any one of above (1) to (3),
the time setting unit may be configured to multiply the predetermined time interval by a reciprocal of a ratio of the detection elements that operate among the detection elements. In this case, the X-ray exposure period of each operating detection element can be surely set aside.

(5) In the X-ray inspection apparatus according to any one of above (1) to (4),
when the conveyance speed is greater than a predetermined speed, the time setting unit may multiply the predetermined time interval by the magnification set to a natural number multiple. In this case, since the delay time can be sufficiently extended, the contrast of the image generated by the image generation unit can be further improved.

(6) In the X-ray inspection apparatus according to any one of above (1) to (5),
when a maximum intensity of detection signals included in the detection results is less than a predetermined intensity, the time setting unit may multiply the predetermined time interval by the magnification set to a natural number multiple. In this case, since the delay time can be sufficiently extended, the contrast of the image generated by the image generation unit can be further improved.

(7) In the X-ray inspection apparatus according to any one of above (1) to (6),
when the magnification is greater than 1 and a maximum intensity of detection signals included in the detection results is greater than a predetermined intensity, the time setting unit may set the magnification to 1. In this case, the contrast of the image generated by the image generation unit can be further improved.

(8) The X-ray inspection apparatus according to any one of above (1) to (7) may further include
a determination unit configured to determine whether a foreign matter is present in the article including a food, on the basis of the image. In this case, the determination unit can satisfactorily determine whether a foreign matter is present even when the X-ray output is suppressed.

### Advantageous Effects of Invention

One aspect of the present invention can provide an X-ray inspection apparatus that can perform a satisfactory inspection regardless of the conveyance speed.

### Brief Description of Drawings

FIG. 1 is a configuration diagram of an X-ray inspection apparatus according to an embodiment.
FIG. 2 is a schematic configuration diagram of the interior of a shield box illustrated in FIG. 1.
FIG. 3 is a schematic diagram illustrating detection elements in operation and detection elements not used for image generation.
FIG. 4 is a functional configuration diagram of a control unit.

### Description of Embodiments

A preferred embodiment of the present invention will now be described in detail with reference to the accompanying drawings. Note that in the description of the drawings, the same or equivalent elements are denoted by the same reference signs, and duplicate descriptions will be omitted.

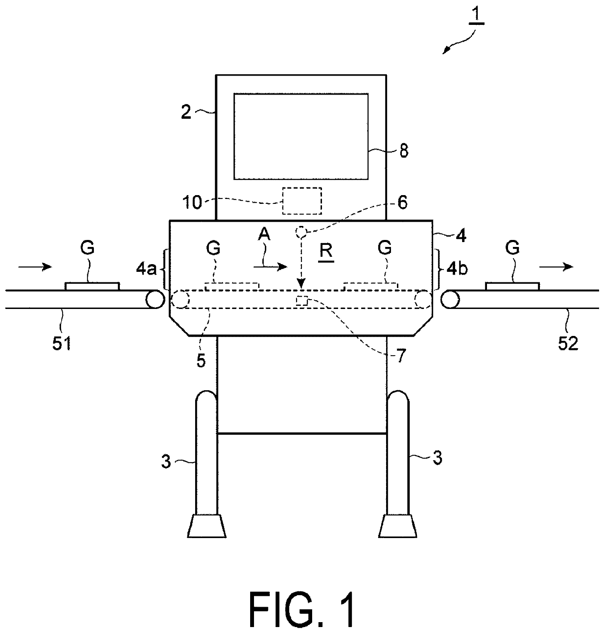

As illustrated in FIG. 1, an X-ray inspection apparatus 1 includes a device main body 2, a support leg 3, a shield box 4, a conveying unit 5, an X-ray irradiation unit 6, a sensor unit 7, a display operation unit 8, and a control unit 10. The X-ray inspection apparatus 1 generates X-ray transmission images of an article G while conveying the article G, and inspects the article G on the basis of the X-ray transmission images. The article G before inspection is carried into the X-ray inspection apparatus 1 by a supply conveyor 51. The article G after inspection is carried out from the X-ray inspection apparatus 1 by a delivery conveyor 52.

The device main body 2 accommodates the control unit 10 or the like. The support leg 3 supports the device main body 2. The shield box 4 is provided in the device main body 2. The shield box 4 is a housing for preventing leakage of X-rays (electromagnetic waves) to the outside. Inside the shield box 4, an inspection chamber R is provided in which the inspection of article G by X-rays is performed. A supply port 4a and a delivery port 4b are formed in the shield box 4. The article G before the inspection is carried from the supply conveyor 51 to the inspection chamber R through the supply port 4a. The article G after the inspection is carried from the inspection chamber R to the delivery conveyor 52 through the delivery port 4b.

The conveying unit 5 is a member for conveying the article G, and is arranged extending through the center of the shield box 4. The conveying unit 5 conveys the article G along a conveyance direction A from the supply port 4a to the delivery port 4b via the inspection chamber R. The speed (conveyance speed) at which the article G is conveyed by the conveying unit 5 is set by the control unit 10, for example. The conveying unit 5 is, for example, a belt conveyor stretched between the supply port 4a and the delivery port 4b. Note that the conveying unit 5 may project outward from the supply port 4a and the delivery port 4b.

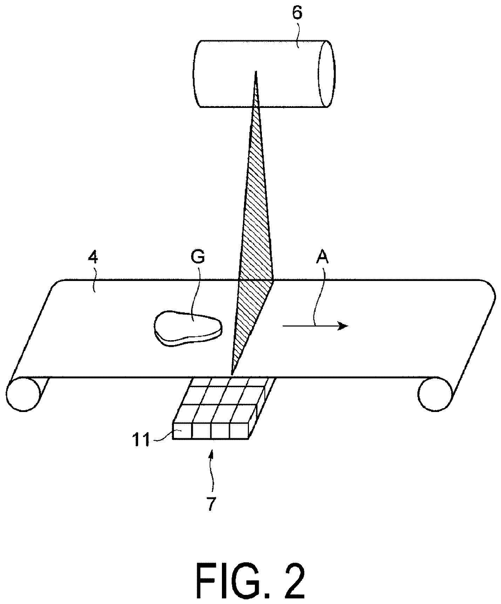

As illustrated in FIGS. 1 and 2, the X-ray irradiation unit 6 is an electromagnetic wave irradiation unit arranged in the shield box 4, and irradiates the article G conveyed by the conveying unit 5 with X-rays. The X-rays include X-rays of various energy regions from low energy (long wavelength) to high energy (short wavelength). Thus, the X-ray irradiation unit 6 irradiates the article G conveyed by the conveying unit 5 with X-rays of a plurality of energy regions. X-ray irradiation (i.e., idling of X-ray irradiation unit 6) by the X-ray irradiation unit 6 may be performed after the activation of the X-ray inspection apparatus 1 and before the inspection of the article G. Note that "low" and "high" in the above-described low energy and high energy indicate "low" and "high" relatively among a plurality of energy regions of the X-rays emitted from the X-ray irradiation unit 6, and do not indicate a specific range. The power (in particular, current) supplied to the X-ray irradiation unit 6 can be changed manually or automatically. By changing the power, the output of the X-rays emitted to the article G can be changed. Thus, the X-rays having an appropriate intensity corresponding to the article G can be emitted.

The sensor unit 7 is a sensor unit that detects electromagnetic waves. The sensor unit 7 is arranged in the shield box 4 at a position facing the X-ray irradiation unit 6 in the vertical direction. The sensor unit 7 includes detection elements 11 arranged in a planar shape (two-dimensional). The detection elements 11 are arranged in a direction (width direction) orthogonal to at least the conveyance direction A of the conveying unit 5 and the vertical direction. A line sensor may be configured by some of the detection elements 11 in the sensor unit 7. For example, line sensors extending along the width direction may be arranged side by side in the conveyance direction A in the sensor unit 7. In this case, each of the line sensors includes detection elements 11 arranged along the width direction. Note that unless otherwise mentioned below, the detection elements 11 correspond to all the detection elements 11 included in the sensor unit 7.

In the present embodiment, the sensor unit 7 is a direct conversion type detection unit that can detect X-rays by a photon counting method. The detection element 11 is, for example, a sensor (multi-energy sensor) that detects X-rays in each of a plurality of energy regions transmitted through the article G, and the sensor unit 7 may be a Time Delay Integration sensor (TDI sensor). The detection element 11 includes, for example, a photon detection type sensor such as a CdTe semiconductor detector. In the detection element 11, for example, an electron-hole pair is generated when an X-ray photon arrives. A process for counting photons (photon counting) is performed on the basis of the energy (photon energy) obtained at this time. The counting process is performed, for example, by the sensor unit 7 or by a calculation unit (not illustrated) included in the detection element 11. The result of the counting process (detection result) of each detection element 11 by the calculation unit is output to the control unit 10 at a predetermined time interval, for example. The predetermined time interval is a time (default time) predetermined for the X-ray inspection apparatus 1. Note that the predetermined time interval is also referred to as a read interval or a delay time, and can be appropriately changed by the control unit 10 (details will be described below).

Each detection element 11 of the sensor unit 7 may classify the photon energy of X-rays, which is detected on the basis of any threshold, into two or more energy regions. In this case, the sensor unit 7 can perform photon counting in each energy region. Any threshold is, for example, one or more values (in keV) set by the control unit 10. Any threshold may be set, for example, by the method described in JP 2023-132587 A, or by using a following brightness level.

When the X-ray inspection apparatus 1 is activated, sensitivity correction (calibration) of the sensor unit 7 may be performed. In the sensitivity correction, a brightness level is acquired on the basis of X-rays that have not passed through the article G. The brightness level is the number of photon counts detected when X-rays that have not passed through the article G are incident on the sensor unit 7, and corresponds to the intensity of the detection signal included in the detection results. Sensitivity correction of the sensor unit 7 corresponds to correction of output differences between the detection elements 11 included in the sensor unit 7. From the viewpoint of shortening the start-up time of the X-ray inspection apparatus 1, in the sensitivity correction, X-ray irradiation by the X-ray irradiation unit 6 may be started simultaneously with the start of X-ray detection by the sensor unit 7. Note that the sensitivity correction of the sensor unit 7 is performed by the method described in JP 2023-39353 A, for example. In the present embodiment, from the viewpoint of improving the contrast of an image generated by the X-ray inspection apparatus 1, whether the highest brightness level obtained during the sensitivity correction is less than a predetermined threshold is checked. That is, whether the maximum intensity of the detection signal included in the detection results output from at least some of the detection elements 11 obtained during the sensitivity correction is less than a predetermined intensity is checked. The result of the check is output to the control unit 10.

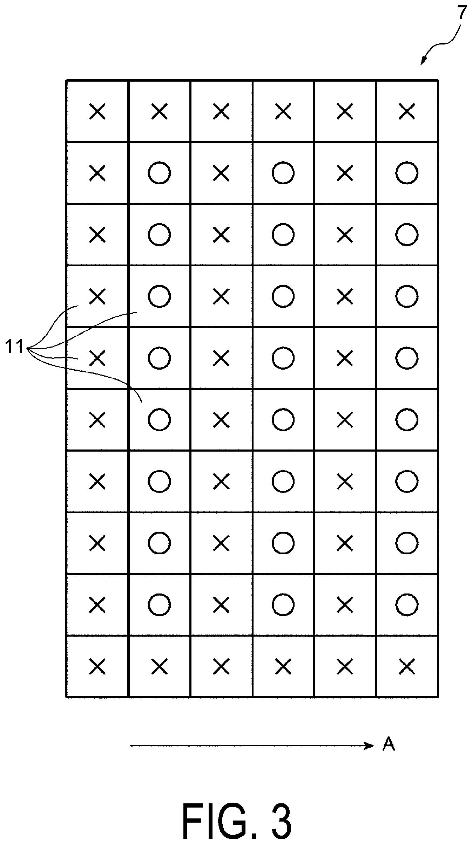

The sensor unit 7 may increase or decrease the number of operating detection elements 11 on the basis of the conveyance speed of the conveying unit 5, the detection results, or the like. FIG. 3 is a schematic diagram illustrating operating detection elements, and detection elements not used for image generation. FIG. 3 illustrates some of the detection elements 11 included in the sensor unit 7, and "○" is added to each of operating detection elements 11 (detection elements 11 used for image generation), and "×" is added to each of detection elements 11 not used for image generation. For example, when the conveyance speed is excessive and satisfactory detection results cannot be output from all the detection elements 11, or when the maximum intensity obtained during sensitivity correction is less than a predetermined intensity, the sensor unit 7 limits the number of operating detection elements 11 as illustrated in FIG. 3. Thus, satisfactory detection results can be output from all the operating detection elements 11. The detection elements 11 to be limited are selected according to predetermined rules, patterns, or the like. The rules, patterns, or the like may be appropriately changed depending on the type of article G, the total operation time of the X-ray inspection apparatus 1, or the like. For example, when only some of the detection elements 11 included in the sensor unit 7 operate, the operating detection elements 11 may always be the same or may be appropriately changed. On the other hand, when the sensor unit 7 limits the number of operating detection elements 11 and when the conveyance speed is no longer excessive, the sensor unit 7 releases the limit on the number of operating detection elements 11. This increases the number of operating detection elements 11. Note that when the line sensors are arranged in the sensor unit 7, the sensor unit 7 may limit the number of operating line sensors. In this case, control of the detection elements 11 by the sensor unit 7 can be simplified. When the sensor unit 7 limits the number of operating detection elements 11, every other line sensor among the line sensors in the conveyance direction A may operate or every two line sensors in the conveyance direction A may operate, for example. Note that in the present embodiment, the sensor unit 7 changes the number of operating detection elements 11, but not limited to this. The number of operating detection elements 11 may be changed manually, for example.

As illustrated in FIG. 1, the display operation unit 8 is a member (display unit) provided in the device main body 2. The display operation unit 8 displays various information and receives input operations of various conditions from the outside. The display operation unit 8 is, for example, a liquid crystal display and displays an operation screen as a touch panel. In this case, the operator can input various conditions via the display operation unit 8. For example, the operator can set the conveyance speed of the conveying unit 5, the power (at least one of current and voltage) supplied to the X-ray irradiation unit 6, the number of operating detection elements 11, or the like via the display operation unit 8. The input operation received by the display operation unit 8 is output to the conveying unit 5, the sensor unit 7, the control unit 10, or the like.

The control unit 10 is arranged inside the device main body 2. The control unit 10 controls the operation of each unit of the X-ray inspection apparatus 1. The control unit 10 is composed of a Central Processing Unit (CPU), a Read Only Memory (ROM), a Random Access Memory (RAM), or the like. The ROM stores a program for controlling the X-ray inspection apparatus 1, an operation mode of the X-ray inspection apparatus 1, or the like.

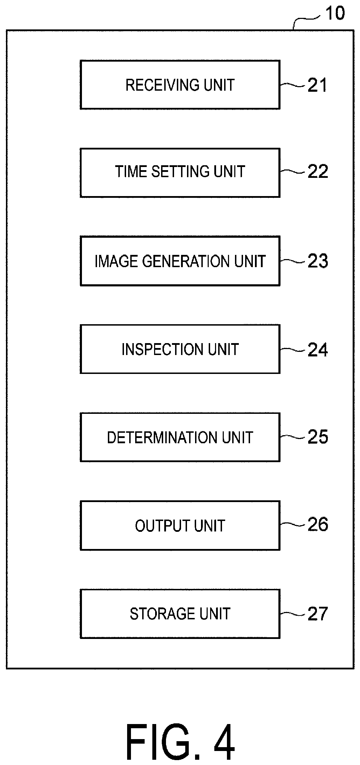

FIG. 4 is a functional configuration diagram of the control unit. As illustrated in FIG. 4, the control unit 10 includes a receiving unit 21, a time setting unit 22, an image generation unit 23, an inspection unit 24, a determination unit 25, an output unit 26, and a storage unit 27.

The receiving unit 21 receives the input operation received by the display operation unit 8. The receiving unit 21 transmits to the time setting unit 22, for example, the conveyance speed of the conveying unit 5, the number of operating detection elements 11, or the like, which are set via the display operation unit 8. The receiving unit 21 also receives the detection results output from the sensor unit 7. The receiving unit 21 transmits the received detection results to the image generation unit 23.

The time setting unit 22 sets a read interval (i.e., the predetermined time interval) at which the image generation unit 23 reads the detection result. The time setting unit 22 can change the read interval by multiplying the predetermined time interval by a magnification that is set on the basis of the operating state of the X-ray inspection apparatus 1. In the present embodiment, the time setting unit 22 multiplies the predetermined time interval by a magnification set on the basis of the conveyance speed or the detection results. The magnification may be 1, natural number multiple of 2 or more, or any multiple exceeding 1. For example, when the conveyance speed is greater than a predetermined speed or when the highest brightness level obtained during sensitivity correction is less than a predetermined threshold (when the maximum intensity of the detection signal obtained during sensitivity correction is less than a predetermined intensity), the time setting unit 22 multiplies the predetermined time interval by a magnification set to a natural number multiple. Alternatively, the time setting unit 22 may multiply the predetermined time interval by a magnification set to any multiple greater than 1 (e.g., 1.25 times, 1.4 times, 1.6 times, 1.75 times, or the like). In this way, the time setting unit 22 can change the read interval by multiplying the predetermined time interval by the magnification. In addition, when the magnification is greater than 1 and the maximum intensity is greater than the predetermined intensity, the time setting unit 22 may set the magnification to 1. Thus, occurrence of pile-up in the sensor unit 7 can be suppressed. Regardless of the change in the read interval, the period required for the counting process by the sensor unit 7, or by the calculation unit included in the detection element 11 is constant. Thus, regardless of the conveyance speed of the conveying unit 5 or the like, the read interval may be changed such that the ratio of the X-ray exposure period of each detection element 11 in the read interval becomes a predetermined value or more.

When the conveyance speed is greater than the predetermined speed or when the maximum intensity of the detection signal included in the detection results is less than the predetermined intensity, both the read interval and the number of detection elements 11 operated by the sensor unit 7 may be changed. In this case, the magnification multiplied to the predetermined time interval may have some relationship with the ratio of operating detection elements 11 among the detection elements 11. For example, from the viewpoint of simplifying the operation control of the X-ray inspection apparatus 1, when the sensor unit 7 limits the number of operating detection elements 11, the time setting unit 22 may multiply the predetermined time interval by the reciprocal of the ratio of operating detection elements 11 among the detection elements 11. For example, when half of the detection elements 11 among all detection elements 11 are operating (i.e., when the above ratio is 0.5 times), the time setting unit 22 may multiply the predetermined time interval by 2.

The image generation unit 23 is mainly composed of, for example, a Graphics Processing Unit (GPU), and develops the detection result signals into a two-dimensional image on a memory. The memory in which the two-dimensional image is developed is, for example, a memory included in the GPU, but not limited to this. The image generation unit 23 reads the detection results output from at least some of the detection elements 11 included in the sensor unit 7 at the read interval, for example, to generate one or more time delay integral images used for the inspection of the article G. For example, a plurality of transmission images respectively corresponding to the plurality of energy regions are generated by the image generation unit 23. The image generation unit 23 may generate one or more of difference images from the plurality of transmission images. The image generation unit 23 may use, for example, an image processing algorithm or a program automatically set by machine learning. The image processing algorithm is composed of one image processing filter or a combination of image processing filters. At least one or more of the image processing algorithms can be automatically generated from the image processing filters on the basis of the specifications, inspection conditions or the like of the X-ray inspection apparatus 1 by employing Genetic Algorithms (GA), which are methods realized by applying the mechanism of heredity and evolution in the biological world. At least a part of the image processing algorithms can also be appropriately set by the operator via the display operation unit 8. The program automatically set by machine learning is a predictive model (learned model) generated by machine learning, and an inference program in which parameters (learned parameters) obtained as a result of machine learning are incorporated. Examples of machine learning used in the learned model include neural networks, support vector machines, and genetic algorithms.

The inspection unit 24 inspects the article G on the basis of the images generated by the image generation unit 23. For example, the inspection unit 24 inspects the article G by using the transmission images, the difference images, or the like. The inspection unit 24 may inspect the article G on the basis of both the difference images and the transmission images. During the generation of the difference images by the image generation unit 23, the inspection of the article G based on the transmission images or the like may be performed. The inspection unit 24 inspects, for example, the article G for whether a foreign matter is present or whether a chip/crack is present, but not limited to this. In the case where the article G is wrapped in a sheet-like packaging material, the inspection unit 24 can also inspect a break of the packaging material, a seal failure of the packaging material (product in seal), or the like. In the case where the article G is accommodated in a package, the inspection unit 24 can perform a foreign matter confirmation inspection in the package, a missing part confirmation inspection, a number of accommodated articles confirmation inspection, a cavity confirmation inspection, or the like. The inspection unit 24 transmits the inspection results of the article G to the determination unit 25 and the storage unit 27.

The determination unit 25 determines whether the article G is non-defective on the basis of the inspection results received from the inspection unit 24. For example, the determination unit 25 determines whether a foreign matter is present in the article G, whether a chip/crack is present in the article G, or the like. The determination unit 25 transmits the determination results to the output unit 26 and the storage unit 27.

The output unit 26 outputs the determination results of the determination unit 25 to at least one of the units other than the control unit 10 in the X-ray inspection apparatus 1, and the apparatuses different from the X-ray inspection apparatus 1. This enables at least either of the X-ray inspection apparatus 1 and the apparatuses different from the X-ray inspection apparatus 1 (e.g., a sorting apparatuses located downstream of the X-ray inspection apparatus 1) to perform the operation when the article G is defective. Other examples of the apparatuses different from the X-ray inspection apparatus 1 include, for example, the supply conveyor 51, the delivery conveyor 52, and a notification apparatus.

The storage unit 27 stores signals, data, or the like generated by the control unit 10. For example, the storage unit 27 stores detection results transmitted from the receiving unit 21, image data transmitted from the image generation unit 23, data related to inspection results transmitted from the inspection unit 24, and data related to determination results transmitted from the determination unit 25.

According to the X-ray inspection apparatus 1 according to the present embodiment described above, the time setting unit 22 multiplies the predetermined time interval by a magnification set on the basis of the conveyance speed of the conveying unit 5 or the detection results output from at least some of the detection elements 11. For example, when the conveyance speed of the conveying unit 5 is too fast, or when the output of at least some of the detection elements 11 is too low and the detection results are insufficient, the time setting unit 22 multiplies the predetermined time interval by a magnification greater than 1. In this case, the read interval at which the image generation unit 23 reads the detection results output from the sensor unit 7 is extended. By extending the read interval for some reason, the X-ray exposure period of each detection element 11 can be adjusted to an appropriate period. Thus, by using the X-ray inspection apparatus 1 according to the present embodiment, since the detection result output from each detection element 11 is improved, a satisfactory inspection can be performed regardless of the conveyance speed of the conveying unit 5.

In the present embodiment, the magnification is automatically set on the basis of the conveyance speed or the detection results. The time setting unit 22 automatically multiplies the predetermined time interval by the magnification. This enables an appropriate read interval (delay time) based on the conveyance speed, the detection results, or the like to be automatically set without any special setting, work, or the like being performed by an operator of the X-ray inspection apparatus 1. Thus, even an ordinary user of the X-ray inspection apparatus 1 can perform a satisfactory inspection regardless of the conveyance speed of the conveying unit 5.

In the present embodiment, the sensor unit 7 may increase or decrease the number of operating detection elements 11 on the basis of the conveyance speed or the detection results. In this case, the X-ray exposure period of each detection element 11 can be surely set aside.

In the present embodiment, the sensor unit 7 may detect X-rays by a photon counting method. In this case, the contrast of the image generated by the image generation unit 23 can be improved.

In the present embodiment, the time setting unit 22 may multiply the predetermined time interval by the reciprocal of the ratio of the operating detection elements 11 among the detection elements 11. In this case, the X-ray exposure period of each operating detection element 11 can be surely set aside.

In the present embodiment, when the conveyance speed is faster than a predetermined speed, the time setting unit 22 may multiply the predetermined time interval by the magnification set to a natural number multiple. In this case, since the delay time can be sufficiently extended, the contrast of the image generated by the image generation unit 23 can be further improved.

In the present embodiment, when the maximum intensity of the detection signals included in the detection results is less than the predetermined intensity, the time setting unit 22 may multiply the predetermined time interval by the magnification set to a natural number multiple. In this case, since the delay time can be sufficiently extended, the contrast of the image generated by the image generation unit 23 can be further improved.

In the present embodiment, when the magnification is greater than 1 and the maximum intensity of the detection signals included in the detection results is greater than the predetermined intensity, the time setting unit 22 may set the magnification to 1. In this case, the contrast of the image generated by the image generation unit 23 can be further improved.

In the present embodiment, the X-ray inspection apparatus 1 includes the determination unit 25 that determines whether a foreign matter is present in the article G including the food, on the basis of the image. Thus, the determination unit 25 can satisfactorily determine whether a foreign matter is present even when the output of the X-ray is suppressed.

Although the embodiments of the present invention have been described above, the present invention is not necessarily limited to the above-described embodiments, and various modifications can be made without departing from the gist thereof. For example, in the above-described embodiments, the sensor unit is a device that can detect X-rays by a photon counting method, but not limited thereto. The detection element included in the sensor unit may include at least a scintillator and a photodiode.

### Reference Signs List

1 X-ray inspection apparatus, 3 Support leg, 4 Shield box, 4a Supply port, 4b Delivery port, 5 Conveying unit, 6 X-ray irradiation unit, 7 Sensor unit, 8 Display operation unit, 10 Control unit, 11 Detection element, 21 Receiving unit, 22 Time setting unit, 23 Image generation unit, 24 Inspection unit, 25 Determination unit, 26 Output unit, 27 Storage unit, A Conveyance direction, G Article

## Claims

1. An X-ray inspection apparatus (1), comprising:
a conveying unit (5) configured to convey an article (G);
an irradiation unit (6) configured to irradiate the article (G) conveyed by the conveying unit (5) with X-rays;
a sensor unit (7) having a plurality of detection elements (11), the plurality of detection elements (11) being configured to detect the X-rays and being arranged in a planar shape;
an image generation unit (23) configured to read detection results output from at least some of the plurality of detection elements (11) at a predetermined time interval and generate an image; and
a time setting unit (22) configured to set the predetermined time interval,
wherein
the time setting unit (22) is configured to multiply the predetermined time interval by a magnification set on the basis of a conveyance speed of the conveying unit (5) or the detection results.

2. The X-ray inspection apparatus (1) according to claim 1, wherein
the sensor unit (7) is configured to increase or decrease the number of detection elements (11) that are to be in operation among the plurality of detection elements (11) on the basis of the conveyance speed or the detection results.

3. The X-ray inspection apparatus (1) according to claim 1 or 2, wherein
the plurality of detection elements (11) are configured to detect the X-rays by a photon counting method.

4. The X-ray inspection apparatus (1) according to any one of claims 1 to 3, wherein
the time setting unit (22) is configured to multiply the predetermined time interval by a reciprocal of a ratio of the detection elements (11) that are to be in operation to the plurality of detection elements (11).

5. The X-ray inspection apparatus (1) according to any one of claims 1 to 4, wherein
when the conveyance speed is greater than a predetermined speed, the time setting unit (22) multiplies the predetermined time interval by the magnification set to a natural number multiple.

6. The X-ray inspection apparatus (1) according to any one of claims 1 to 5, wherein
when a maximum intensity of detection signals included in the detection results is less than a predetermined intensity, the time setting unit (22) multiplies the predetermined time interval by the magnification set to a natural number multiple.

7. The X-ray inspection apparatus (1) according to any one of claims 1 to 6, wherein
when the magnification is greater than 1 and a maximum intensity of detection signals included in the detection results is greater than a predetermined intensity, the time setting unit (22) sets the magnification to 1.

8. The X-ray inspection apparatus (1) according to any one of claims 1 to 7, further comprising
a determination unit (25) configured to determine whether a foreign matter is present in the article (G) including a food, on the basis of the image.
